# FASCICULE DE BREVET EUROPEEN

(11) **EP 3 966 434 B1**
(45) Date de publication et mention de la délivrance du brevet: **19.06.2024**
(21) Numéro de dépôt: 20731927.8
(22) Date de dépôt: 04.05.2020
(51) Int. Cl.: F01D 25/20, F01D 21/12, F01D 21/14, F02C 7/36, F01M 1/02, F01M 1/18, F16H 57/04, F02C 7/06, F02C 7/14, F16N 7/00, F01M 1/12

(54) **SYSTEME HUILE POUR TURBOMACHINE**
ÖLSYSTEM FÜR EINEN TURBINENMOTOR
OIL SYSTEM FOR A TURBINE ENGINE

(30) Priorité: 10.05.2019 FR 1904892
(43) Date de publication de la demande: 16.03.2022
(73) Titulaire: SAFRAN AIRCRAFT ENGINES, 75015 Paris (FR)
(72) Inventeur: GAULLY, Bruno, Robert, 77550 MOISSY-CRAMAYEL (FR); BERTHO, Germain, Michel, Emmanuel, 77550 MOISSY-CRAMAYEL (FR); EMPRIN, Yves, 77550 MOISSY-CRAMAYEL (FR)
(74) Mandataire: Cabinet Beau de Loménie
(86) Numéro de dépôt international: PCT/FR2020/050743
(87) Numéro de publication internationale: WO 2020/229754

(56) Documents cités:
- EP-A1- 2 801 707
- EP-A1- 2 949 883
- EP-A2- 2 253 805
- EP-A2- 3 293 363
- WO-A1-2010/086422
- FR-A1- 2 925 110

## Description

### Domaine Technique

Le présent exposé concerne un système huile pour turbomachine, permettant de continuer d'alimenter en huile les équipements de la turbomachine en cas de survenance d'un feu au sein de la turbomachine.

Un tel système huile peut être utilisé dans tout type de turbomachine, et tout particulièrement dans le domaine aéronautique pour les turboréacteurs d'aéronef.

### Technique antérieure

Dans les turbomachines, le système huile assure la fonction fondamentale d'alimenter en huile les organes de la turbomachine pour les lubrifier et/ou les refroidir dans toutes les phases du fonctionnement afin de garantir un fonctionnement correct de la turbomachine : en particulier, le système huile est chargé de lubrifier et de refroidir les roulements et les engrenages de la turbomachine mais également de refroidir échangeurs ainsi que certains carters soumis à de fortes températures tels ceux des générateurs électriques, des pompes ou des boîtes d'engrenages.

Dans les configurations actuelles, les pompes du système huile sont entraînées mécaniquement par la boîte d'engrenages d'accessoires (AGB : Accessory Gear Box) : cette boîte d'engrenages d'accessoires, supportant plusieurs accessoires de la turbomachine, est elle-même entraînée par un corps de la turbomachine, le plus souvent le corps haute pression (HP), par l'intermédiaire généralement d'une boîte d'engrenage d'entrée (IGB : Inlet Gear Box), d'un arbre d'entraînement radial (RDS : Radial Drive Shaft), et d'une boîte d'engrenage de transfert (TGB : Transfer Gear Box).

Dès lors, la vitesse de rotation des pompes du système huile, et donc le débit d'huile, est fonction de la vitesse de rotation du corps de la turbomachine qui entraîne les accessoires.

Or, il existe des situations dans lesquelles il est nécessaire d'arrêter le moteur tout en continuant d'assurer l'alimentation en huile. Par exemple, en cas de survenance d'un feu, l'arrivée de carburant est coupée et le régime de la turbomachine décroit alors jusqu'à atteindre le régime d'autorotation ; pourtant l'alimentation en huile doit être maintenue à un débit suffisant pour permettre la lubrification et surtout le refroidissement des organes de la turbomachine exposés à une telle source additionnelle de chaleur afin de garantir la tenue mécanique de ces derniers et éviter notamment l'apparition de fuites d'huile qui pourraient alimenter le feu.

En conséquence, dans la plupart des configurations actuelles, les pompes du système d'huile sont surdimensionnées pour assurer un débit suffisant même en cas de régime d'autorotation, augmentant dès lors la masse, l'encombrement et le coût du système huile, ce qui impacte la consommation de carburant de la turbomachine et donc la distance franchissable dans le cas d'un turboréacteur d'aéronef. Le document FR 2 925 110 divulgue une autre configuration dans laquelle une pompe possède deux logiques de pilotage distinctes.

Une autre option connue est d'ajouter des couvertures ou des écrans thermiques ou des boucliers anti-feu sur les équipements pour limiter les effets du rayonnement thermique provoqué par le feu. Toutefois, ceci aboutit également à une augmentation de la masse, de l'encombrement et du coût du système huile.

Il existe donc un réel besoin pour un système huile qui soit dépourvu, au moins en partie, des inconvénients inhérents aux configurations connues précitées.

### Exposé de l'invention

Le présent exposé concerne un système huile pour turbomachine, comprenant
un circuit d'huile,
au moins un équipement consommateur d'huile, alimenté par le circuit d'huile, une unité de pompage, comprenant au moins une pompe à entraînement électrique pilotable en vitesse, alimentant le circuit d'huile, et
une unité de commande électronique, configurée pour piloter la pompe à entraînement électrique,
dans lequel l'unité de commande électronique comprend deux logiques distinctes de pilotage de la pompe à entraînement électrique,
dans lequel l'unité de commande électronique est configurée pour piloter la pompe à entraînement électrique selon la première logique par défaut et caractérisé en ce que l'unité de commande est configurée pour basculer vers la deuxième logique en cas de réception d'un signal représentatif de la présence d'un feu ou d'une surchauffe, émis par un détecteur de feu, et en ce que l'unité de commande électronique est configurée pour arrêter la pompe à entraînement électrique lorsqu'elle reçoit un signal de fuite en provenance d'un détecteur de fuite.

Ainsi, grâce à une telle pompe à entraînement électrique, il est possible de s'affranchir de la vitesse de rotation de la turbomachine et donc de découpler la vitesse de rotation de la pompe, et donc le débit d'huile, du régime effectif de la turbomachine. En conséquence, même en cas de fonctionnement dégradé de la turbomachine, par exemple en cas d'arrêt suite à la survenance d'un feu, le système huile peut continuer à fonctionner normalement.

En effet, en particulier, l'énergie électrique nécessaire à l'entrainement de la pompe peut être fournie aussi bien par la turbomachine que par l'aéronef, par exemple en cas de fonctionnement dégradé de la turbomachine.

De plus, grâce à une telle pompe à entraînement électrique, il est possible de piloter le débit d'huile en fonction des besoins effectifs de la turbomachine, éventuellement en temps réel. En particulier, ceci permet d'assurer un débit d'huile suffisant en cas de feu, éventuellement plus important, afin de refroidir efficacement les équipements sans avoir à surdimensionner la pompe.

Grâce à un tel refroidissement amélioré, la présente configuration permet également de réduire, voire de supprimer, le recours aux boucliers thermiques.

Dès lors, la présente configuration bénéficie d'une masse, d'un encombrement et d'un coût réduits par rapport aux configurations existantes.

L'unité de commande électronique est aussi configurée pour arrêter la pompe à entraînement électrique lorsqu'elle reçoit un signal de fuite en provenance d'un détecteur de fuite. Il s'agit de préférence d'un détecteur de fuite d'huile. Grâce au détecteur de fuite, émettant par exemple un signal de fuite lorsqu'il mesure une chute de pression dans le circuit d'huile dépassant un certain seul, il est possible d'arrêter l'alimentation en huile dès qu'une fuite est détectée : on réduit ainsi, ou on annule, le débit de fuite d'huile, ce qui réduit le risque d'alimenter le feu avec cette huile de fuite.

Dans certains modes de réalisation, la première logique, nominale, permet de piloter la pompe à entraînement électrique dans une première plage de vitesse, et la deuxième logique, en cas de feu, permet de piloter la pompe à entrainement électrique dans une deuxième plage de vitesse. On précise à cet égard que la première et/ou la deuxième plage de vitesse peut être réduite à une valeur unique ou à un jeu de valeurs discrètes.

Dans certains modes de réalisation, la deuxième plage de vitesse est supérieure, au moins en moyenne, et de préférence strictement, à la vitesse d'autorotation du moteur, également appelée vitesse de moulinet (« windmilling en anglais »).

Dans certains modes de réalisation, le circuit d'huile comprend un ou plusieurs éléments parmi les suivants : canalisation, réservoir d'huile ; crépine ; filtre ; échangeur carburant/huile ; échangeur air/huile ; et pompe de récupération.

Dans certains modes de réalisation, au moins un équipement consommateur d'huile est une boîte d'engrenages d'accessoires. En effet, la boîte d'engrenage d'accessoires se situe généralement dans une zone feu, c'est-à-dire une zone de la turbomachine particulièrement susceptible de voir la survenance d'un feu et donc protégée en conséquence.

Dans certains modes de réalisation, la boîte d'engrenages d'accessoires comprend des engrenages d'accessoires enfermés dans un carter.

Dans certains modes de réalisation, la boîte d'engrenages d'accessoires comprend des gicleurs configurés pour projeter de l'huile du circuit d'huile sur au moins une paroi, de préférence intérieure, du carter de la boîte d'engrenages d'accessoires. Selon les configurations, ces gicleurs peuvent fonctionner en continu, afin de refroidir le carter de la boîte d'engrenages d'accessoires en permanence, ou bien uniquement en cas de feu, afin de refroidir le carter en cas d'exposition directe au feu et retarder autant que possible sa fusion. Dans un tel cas, le déclenchement des gicleurs peut être commandé par l'unité de commande électronique.

Dans certains modes de réalisation, au moins un équipement consommateur d'huile est un générateur électrique connecté à la boîte d'accessoires. En effet, un tel générateur électrique s'échauffe facilement et nécessite donc d'être refroidi.

Dans certains modes de réalisation, au moins un équipement consommateur d'huile est une enceinte enfermant au moins un roulement. En effet, de tels roulements nécessitent à la fois une fonction de lubrification et une fonction de refroidissement.

Dans certains modes de réalisation, la pompe à entraînement électrique est entraînée par au moins un moteur électrique. Ce moteur électrique peut notamment être du type à courant continu ou du type asynchrone.

Dans certains modes de réalisation, la pompe à entraînement électrique est entraînée par deux moteurs électriques redondants. De cette manière, on assure la continuité de l'alimentation en huile même en cas de défaillance de l'un des moteurs électriques, par exemple si ce dernier est à l'origine du feu détecté.

Dans certains modes de réalisation, l'unité de pompage comprend une pompe principale, à entraînement mécanique, accouplée par exemple à la boîte d'engrenages d'accessoires, et une pompe secondaire, à entraînement électrique. De cette manière, l'alimentation en huile peut être assurée par la pompe principale en fonctionnement normal, la pompe secondaire prenant le relai, ou assistant tout au moins la pompe principale, en fonctionnement dégradé : dans un tel cas, la pompe principale, bien qu'à entraînement mécanique, peut rester d'une taille modeste.

Dans certains modes de réalisation, le système huile comprend au moins un détecteur de feu configuré pour émettre un signal représentatif de la présence d'un feu lorsqu'il détecte la présence d'un feu dans une zone feu de la turbomachine, de préférence à proximité du carter de la boîte d'accessoires. Par exemple, le détecteur de feu peut être situé entre le carter de la boîte d'accessoires et les limites de la zone feu dans lequel cette boîte d'accessoire est située. En particulier, lorsque la boîte d'accessoires est située radialement à l'extérieur de la veine secondaire, cette zone feu peut être délimitée par le carter de soufflante et la paroi externe de conduite de soufflante d'une part et le carter de la nacelle d'autre part ; lorsque la boîte d'accessoires est située radialement entre la veine principale et la veine secondaire, cette zone feu peut être délimitée entre le carter du moteur d'une part et la paroi interne de conduite de soufflante d'autre part. Par exemple, le détecteur peut émettre le signal représentatif de la présence d'un feu lorsqu'il mesure une température dépassant un certain seuil.

Dans certains modes de réalisation, le détecteur de feu est du type pneumatique, se déclenchant par exemple en fonction de la dilatation d'un gaz enfermé dans une enceinte.

Dans certains modes de réalisation, le détecteur de feu est du type à thermocouple.

Dans certains modes de réalisation, le détecteur de feu est du type à thermistor.

Dans certains modes de réalisation, au moins un détecteur de feu est monté sur le carter de la boîte d'engrenages d'accessoires. Ceci permet donc de basculer vers la deuxième logique de commande lorsqu'un feu menace l'intégrité de la boîte d'engrenages d'accessoire.

Dans certains modes de réalisation, le système huile comprend au moins un commutateur manuel configuré pour émettre un signal représentatif de la présence d'un feu lorsqu'il est activé manuellement. Ceci permet au pilote de l'aéronef de forcer le basculement vers la deuxième logique de commande, par exemple lorsque d'autres informations lui ont révélé la présence d'un feu dans la turbomachine.

Dans certains modes de réalisation, la première logique de commande est basée sur un régime de fonctionnement normal de la turbomachine. La première logique de commande reproduit donc sensiblement le comportement d'une pompe entraînée par la boîte d'engrenages d'accessoires.

Dans certains modes de réalisation, dans la première logique de commande, la vitesse de pilotage de la pompe à entraînement électrique est fonction de la vitesse de rotation d'un corps de la turbomachine, de préférence le corps haute-pression de la turbomachine. Par exemple, la vitesse de pilotage de la pompe à entraînement électrique peut être proportionnelle à la vitesse de rotation de ce corps de la turbomachine. La vitesse de pilotage peut également être réglée de telle sorte que le débit global de l'unité de pompage soit proportionnel à la vitesse de rotation de ce corps de la turbomachine. De cette manière, le débit d'alimentation croit sensiblement en fonction des besoins en huile de la turbomachine.

Dans certains modes de réalisation, la deuxième logique de commande est basée sur le régime d'autorotation de la turbomachine. Elle permet ainsi de tenir compte du fait que la turbomachine tourne à une vitesse réduite ; cela n'implique toutefois pas que la vitesse de pilotage dans la deuxième logique de commande corresponde à la vitesse d'autorotation de la turbomachine ; au contraire, cette vitesse de pilotage sera généralement plus élevée que cette vitesse d'autorotation. Ainsi, dans la deuxième logique de commande, la vitesse de pilotage n'est proportionnelle à la vitesse de rotation d'aucun des corps de la turbomachine.

Dans certains modes de réalisation, dans la deuxième logique de commande, la vitesse de pilotage de la pompe à entraînement électrique est une valeur prédéterminée, tenant compte éventuellement du modèle de la turbomachine. La vitesse de pilotage peut également être réglée de telle sorte que le débit global de l'unité de pompage prenne une valeur prédéterminée, tenant compte éventuellement du modèle de la turbomachine. En effet, dans la deuxième logique de commande, les besoins en huile sont principalement liés aux besoins de refroidissement pour lutter contre le feu et ne dépendent donc pas, ou pratiquement pas, du régime de la turbomachine. En particulier, cette valeur prédéterminée peut être choisie de manière à assurer un débit tel que ci-dessous.

Dans certains modes de réalisation, dans la deuxième logique de commande, le débit global de l'unité de pompage est compris entre 100 et 600 l/h, de préférence entre 100 et 300 l/h, de préférence encore entre 150 et 200 l/h.

Le présent exposé concerne également une turbomachine, comprenant un système huile selon l'un quelconque des modes de réalisation précédents.

Les caractéristiques et avantages précités, ainsi que d'autres, apparaîtront à la lecture de la description détaillée qui suit, d'exemples de réalisation du système huile proposé. Cette description détaillée fait référence aux dessins annexés.

### Brève description des dessins

Les dessins annexés sont schématiques et visent avant tout à illustrer les principes de l'exposé.

Sur ces dessins, d'une figure à l'autre, des éléments (ou parties d'élément) identiques sont repérés par les mêmes signes de référence.
[Fig. 1] La figure 1 est un schéma d'un premier système huile selon l'exposé.
[Fig. 2] La figure 2 représente un ordinogramme de commande du système huile.
[Fig. 3] La figure 3 est un schéma d'un deuxième système huile selon l'exposé.

### Description des modes de réalisation

Afin de rendre plus concret l'exposé, un exemple de système huile est décrit en détail ci-après, en référence aux dessins annexés. Il est rappelé que l'invention ne se limite pas à cet exemple.

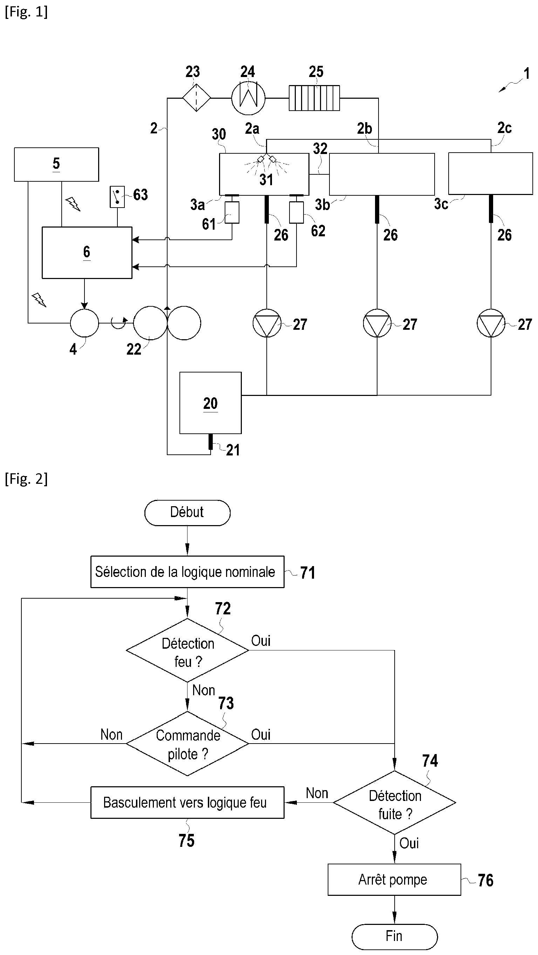

La figure 1 illustre de manière schématique un premier exemple de système huile 1 selon l'exposé.

Ce système huile 1 comprend un circuit d'huile 2 alimentant en huile une pluralité d'équipements 3a, 3b, 3c. Le circuit d'huile 2 comprend, d'amont en aval, un réservoir 20, une crépine 21, une pompe d'alimentation 22, un filtre 23, un échangeur carburant/huile 24, un échangeur air/huile 25, les équipements 3, prévus chacun sur une branche d'alimentation distincte 2a, 2b, 2c, en dérivation les unes des autres, des crépines 26 et des pompes de récupération 27, en aval de chaque équipement 3, permettant de ramener l'huile de chaque branche d'alimentation 2a, 2b, 2c au réservoir 20.

Dans le présent exemple, les équipements 3a, 3b, 3c comprennent une boîte d'engrenages, de préférence la boîte d'engrenages d'accessoires 30 de la turbomachine. Ainsi, plus spécifiquement, le circuit d'huile 2 comprend une pluralité de gicleurs 31 prévus à l'intérieur de la boîte d'engrenages d'accessoires 30 pour projeter de l'huile sur les engrenages de cette dernière ainsi que sur au moins certaines parois internes de son carter. L'huile ainsi projetée est ensuite récupérée au point le plus bas de la boîte d'engrenages d'accessoires 30. Les équipements 3a, 3b, 3c peuvent également comprendre d'autres boîtes d'engrenages, des carters d'autres accessoires, ou encore des enceintes de roulement. Certains de ces équipements 3a, 3b, 3c peuvent être entrainé par la boîte d'engrenages d'accessoires 30 à l'aide d'une transmission mécanique 32. Il va de soi que le circuit d'huile 2 peut alimenter un nombre quelconque d'équipements 3a, 3b, 3c , et pas seulement trois tel que cela est représenté sur la figure 1.

Le système huile 1 comprend en outre un moteur électrique 4 dont la sortie mécanique est accouplée à la pompe d'alimentation 22 afin d'entraîner cette dernière. Il est pour sa part alimenté par une alimentation électrique 5, prévue sur la turbomachine elle-même et/ou sur l'aéronef : il peut s'agir par exemple d'un générateur électrique, d'une batterie, ou d'une combinaison de ces deux moyens. De préférence, l'alimentation électrique 5 sera assurée par un générateur électrique de la turbomachine, entraîné par la rotation de cette dernière, en fonctionnement normal, et par une batterie prévue sur l'aéronef en fonctionnement dégradé, en cas de feu par exemple. Dans le présent exemple, le moteur électrique 4 est du type asynchrone.

Le système huile 1 comprend en outre une unité de commande électronique 6 alimentée par l'alimentation électrique 5 et configurée pour commander le moteur électrique 4. Plus spécifiquement, dans la plupart des cas, l'unité de commande électronique 6 commande en réalité un onduleur qui modifie le courant électrique alimentant le moteur électrique 4, ce qui modifie en conséquence la vitesse de rotation de ce dernier et pilote donc en vitesse la pompe d'alimentation 22. Toutefois, dans d'autres exemples, il pourrait s'agit de tout autre dispositif de pilotage de moteur électrique.

Le système huile 1 comprend en outre au moins un détecteur de feu 61, monté sur le carter de la boîte d'engrenages d'accessoires 30, et un détecteur de fuite 62, prévu au sein de la boîte d'engrenages d'accessoires 30. Dans le présent exemple, le détecteur de feu 61 est un détecteur pneumatique dans lequel un gaz se dilate jusqu'à activer un commutateur lorsque la température dépasse un seuil prédéterminé ; le détecteur de fuite 62 détecte pour sa part une perte de charge anormale entre deux points du circuit d'huile 2. Le système huile 1 comprend également au moins un commutateur 63 prévu dans le cockpit de l'aéronef : il permet au pilote de signaler manuellement la présence d'un feu. L'unité de commande électronique 6 reçoit en entrée les signaux de ces détecteurs 61, 62 et de ce commutateur 63.

Naturellement, l'unité de commande électronique 6 peut recevoir les signaux d'un plus grand nombre de détecteurs et/ou de commutateurs. Plus généralement, l'unité de commande électronique 6 peut être intégrée au sein du FADEC (« Full-authority digital engine control », c'est-à-dire le système de régulation électronique numérique à pleine autorité du moteur) de la turbomachine.

Au moins deux logiques de commande du moteur électrique 4 sont enregistrées dans la mémoire de l'unité de commande électronique 6 : une première logique de commande, dite logique nominale ; et une deuxième logique de commande, dite logique feu.

La logique nominale est programmée pour reproduire autant que possible le comportement d'une pompe à entraînement mécanique accouplée sur l'arbre HP de la turbomachine. En conséquence, dans le présent exemple, la logique nominale prévoit de commander le moteur électrique 4 de telle sorte que sa vitesse de rotation soit proportionnelle à la vitesse de rotation du corps HP de la turbomachine, appelé classiquement régime N2. Un capteur adéquat permet de transmettre à l'unité de commande électronique 6 l'information relative à ce régime N2.

La logique feu est programmée pour assurer un débit d'huile suffisant en cas de feu, permettant d'assurer le refroidissement des équipements 3a, 3b, 3c face au rayonnement thermique du feu de sorte à préserver ces derniers au moins pendant une durée minimale réglementaire. Elle tient compte notamment du fait que l'alimentation en carburant de la turbomachine est interrompue en cas de feu de telle sorte que son régime est fortement ralenti, correspondant en réalité au régime d'autorotation de la turbomachine. En conséquence, dans le présent exemple, la logique feu prévoit de commander le moteur électrique 4 de telle sorte que sa vitesse de rotation, ou le débit de la pompe d'alimentation 22, soit égale à une valeur prédéterminée. Dans le présent exemple, la logique feu commande le moteur électrique 4 de manière à assurer un débit d'alimentation de 150 l/h.

La routine de commande de l'unité de commande électronique 6, enregistrée dans la mémoire de cette dernière, va maintenant être présentée en référence à la figure 2.

Au début de cette routine, la logique nominale est sélectionnée par défaut (étape 71) puis la routine progresse vers l'étape 72.

Au cours de cette étape 72, l'unité de commande électronique 6 vérifie si un feu a été détecté par le détecteur 61 : si cela n'est pas le cas, la routine progresse vers l'étape 73 ; à l'inverse, si un feu est détecté, la routine progresse vers l'étape 74.

Si aucun feu n'a été détecté, l'unité de commande électronique 6 vérifie au cours de l'étape 73 si le pilote a actionné le commutateur 63 : si cela n'est pas le cas, la routine retourne à l'étape 72 ; à l'inverse, si le pilote a actionné le commutateur 63, signalant ainsi manuellement la présence d'un feu, la routine progresse vers l'étape 74.

Ainsi, tant que la présence d'un feu n'est ni détectée par le détecteur 61 ni signalée par le pilote à l'aide du commutateur 63, la routine boucle et maintient ainsi la logique nominale active.

En revanche, si un feu est détecté ou signalé, la routine atteint l'étape 74. Au cours de cette étape 74, l'unité de commande électronique 6 vérifie si une fuite d'huile a été détectée par le détecteur 62 ; si cela n'est pas le cas, la routine progresse vers l'étape 75 ; à l'inverse, si une fuite est détectée, la routine progresse vers l'étape 76.

Dans le cas où aucune fuite n'est détectée, l'unité de commande électronique 6 bascule vers la logique feu au cours de l'étape 75 et retourne à l'étape 72.

Ainsi, tant que le feu est présent et qu'aucune fuite n'est détectée, la routine boucle et maintient la logique feu active.

En revanche, si une fuite est détectée, la routine atteint l'étape 75 et l'unité de commande électronique 6 déclenche alors l'arrêt du moteur électrique 4 et donc de la pompe d'alimentation 22 afin de ne pas alimenter le feu avec de l'huile provenant de cette fuite. La routine s'achève alors.

Dans cet exemple, le détecteur 61 était un détecteur destiné à détecter la présence d'un feu. Toutefois, ce détecteur, ou un détecteur supplémentaire, peut également permettre de détecter la présence d'une surchauffe, avant même le déclenchement d'un feu. Par exemple, le système peut comprendre un ou plusieurs détecteurs capables de détecteur une hausse anormale de température ou encore l'éclatement de certains organes du système tel un tuyau par exemple.

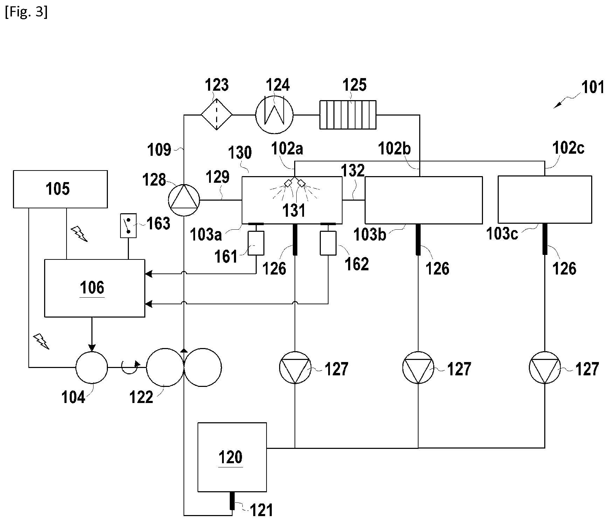

La figure 3 illustre de manière schématique un deuxième exemple de système huile 101 selon l'exposé.

Ce système huile 101 est tout à fait analogue à celui du premier exemple, si ce n'est que son unité de pompage comprend une pompe principale 128, mécanique, entraînée par la boîte d'engrenages d'accessoires 130 à l'aide d'une transmission mécanique 129, et une pompe secondaire 122, analogue à la pompe d'alimentation 22 du premier exemple, entraînée par la sortie du moteur électrique 104.

Comme dans le premier exemple, au moins deux logiques de commande du moteur électrique 104 sont enregistrées dans la mémoire de l'unité de commande électronique 106 : une première logique de commande, dite logique nominale ; et une deuxième logique de commande, dite logique feu.

La logique nominale, correspondant au fonctionnement normal de la turbomachine, prévoit de commander le moteur électrique 104 à faible vitesse, ou à vitesse nulle : en effet, la pompe principale 128 étant entraînée par la boîte d'engrenages d'accessoires 130, sa vitesse de rotation est déjà proportionnelle à la vitesse du corps HP de la turbomachine de telle sorte que la seule pompe principale assure un débit d'huile suffisant pour le fonctionnement normal de la turbomachine.

La logique feu est programmée pour sa part pour assurer un débit d'huile suffisant en cas de feu, tenant compte du fait que le régime de la turbomachine est fortement ralenti et donc que la vitesse de la pompe principale 128 est elleaussi fortement ralentie. En conséquence, comme dans le premier exemple, la logique feu prévoit de commander le moteur électrique 104 de telle sorte que sa vitesse de rotation, ou le débit de l'unité de pompage, soit égale à une valeur prédéterminée, choisie par exemple de manière à assurer un débit d'alimentation de 150 l/h.

La routine de commande de l'unité de commande électronique 106, enregistrée dans la mémoire de cette dernière, est analogue à celle du premier exemple, illustrée sur la figure 2.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Système huile pour turbomachine, comprenant
un circuit d'huile (2),
au moins un équipement consommateur d'huile (3a, 3b, 3c), alimenté par le circuit d'huile (2),
une unité de pompage, comprenant au moins une pompe à entraînement électrique (22, 4) pilotable en vitesse, alimentant le circuit d'huile (2), et une unité de commande électronique (6), configurée pour piloter la pompe à entraînement électrique (22, 4),
dans lequel l'unité de commande électronique (6) comprend deux logiques distinctes de pilotage de la pompe à entraînement électrique (22, 4),
dans lequel l'unité de commande électronique (6) est configurée pour piloter la pompe à entraînement électrique (22, 4) selon la première logique par défaut,
**caractérisé**
**en ce que** l'unité de commande électronique (6) est configurée pour basculer vers la deuxième logique en cas de réception d'un signal représentatif de la présence d'un feu ou d'une surchauffe émis par un détecteur de feu (61), et en ce que l'unité de commande électronique (6) est configurée pour arrêter la pompe à entraînement électrique (22, 4) lorsqu'elle reçoit un signal de fuite en provenance d'un détecteur de fuite (62).

2. Système huile selon la revendication 1, dans lequel au moins un équipement consommateur d'huile (3a, 3b, 3c) est une boîte d'engrenages d'accessoires (30), et
dans lequel la boîte d'engrenages d'accessoires (30) comprend des engrenages d'accessoires enfermés dans un carter.

3. Système huile selon la revendication 2, dans lequel la boîte d'engrenages d'accessoires (30) comprend des gicleurs (31) configurés pour projeter de l'huile du circuit d'huile (2) sur au moins une paroi du carter de la boîte d'accessoires (30).

4. Système huile selon l'une quelconque des revendications 1 à 3, dans lequel la pompe à entraînement électrique (22, 4) est entraînée par au moins un moteur électrique (4).

5. Système huile selon l'une quelconque des revendications 1 à 4, dans lequel l'unité de pompage comprend une pompe principale, à entraînement mécanique, et une pompe secondaire, à entraînement électrique.

6. Système huile selon l'une quelconque des revendications 1 à 5, comprenant au moins un détecteur de feu (61) configuré pour émettre un signal représentatif de la présence d'un feu lorsqu'il détecte la présence d'un feu dans une zone feu de la turbomachine, de préférence à proximité du carter de la boîte d'accessoires (30).

7. Système huile selon l'une quelconque des revendications 1 à 6, comprenant au moins un commutateur manuel (63) configuré pour émettre un signal représentatif de la présence d'un feu lorsqu'il est activé manuellement.

8. Système huile selon l'une quelconque des revendications 1 à 7, dans lequel, dans la première logique de commande, la vitesse de pilotage de la pompe à entraînement électrique (22, 4) est fonction de la vitesse de rotation d'un corps de la turbomachine.

9. Système huile selon l'une quelconque des revendications 1 à 8, dans lequel, dans la deuxième logique de commande, la vitesse de pilotage de la pompe à entraînement électrique (22, 4) est une valeur prédéterminée.

10. Système huile selon l'une quelconque des revendications 1 à 9, dans lequel, dans la deuxième logique de commande, le débit global de l'unité de pompage est compris entre 100 et 600 l/h, de préférence entre 100 et 300 l/h, de préférence encore entre 150 et 200 l/h.

11. Turbomachine, comprenant un système huile (1) selon l'une quelconque des revendications 1 à 10.

## Patentansprüche

1. Ölsystem für einen Turbinenmotor, umfassend:
einen Ölkreislauf (2),
mindestens eine ölverbrauchende Ausrüstung (3a, 3b, 3c), die von dem Ölkreislauf (2) versorgt wird,
eine Pumpeinheit, die mindestens eine Pumpe (22, 4) mit elektrischem Antrieb umfasst, deren Geschwindigkeit regelbar ist und die den Ölkreislauf (2) versorgt, und
eine elektronische Steuereinheit (6), die zum Regeln der Pumpe (22, 4) mit elektrischem Antrieb ausgestaltet ist,
wobei die elektronische Steuereinheit (6) zwei getrennte Logiken zur Regelung der Pumpe (22, 4) mit elektrischem Antrieb umfasst,
wobei die elektronische Steuereinheit (6) standardmäßig zum Regeln der Pumpe (22, 4) mit elektrischem Antrieb gemäß der ersten Logik ausgestaltet ist,
**dadurch gekennzeichnet,**
**dass** die elektronische Steuereinheit (6) dazu ausgestaltet ist, im Fall des Empfangs eines Signals, das für das Vorhandensein eines Brandes oder einer Überhitzung repräsentativ ist und das von einem Branddetektor (61) ausgegeben wird, zu der zweiten Logik überzugehen, und
**dass** die elektronische Steuereinheit (6) dazu ausgestaltet ist, die Pumpe (22, 4) mit elektrischem Antrieb anzuhalten, wenn sie ein Lecksignal empfängt, das von einem Leckdetektor (62) stammt.

2. Ölsystem nach Anspruch 1, wobei mindestens eine ölverbrauchende Ausrüstung (3a, 3b, 3c) ein Zubehör-Getriebekasten (30) ist, und
wobei der Zubehör-Getriebekasten (30) Zubehör-Getriebe umfasst, die in einem Gehäuse eingeschlossen sind.

3. Ölsystem nach Anspruch 2, wobei der Zubehör-Getriebekasten (30) Spritzdüsen (31) umfasst, die dazu ausgestaltet sind, Öl von dem Ölkreislauf (2) auf mindestens eine Wand des Gehäuses des Zubehörkastens (30) zu werfen.

4. Ölsystem nach einem der Ansprüche 1 bis 3, wobei die Pumpe (22, 4) mit elektrischem Antrieb von mindestens einem Elektromotor (4) angetrieben wird.

5. Ölsystem nach einem der Ansprüche 1 bis 4, wobei die Pumpeinheit eine Hauptpumpe mit mechanischem Antrieb und eine Nebenpumpe mit elektrischem Antrieb umfasst.

6. Ölsystem nach einem der Ansprüche 1 bis 5, das mindestens einen Branddetektor (61) umfasst, der dazu ausgestaltet ist, ein Signal auszugeben, das für das Vorhandensein eines Brandes repräsentativ ist, wenn er das Vorhandensein eines Brandes in einer Brandzone des Turbinenmotors, vorzugsweise in der Nähe des Gehäuses des Zubehörkastens (30), feststellt.

7. Ölsystem nach einem der Ansprüche 1 bis 6, das mindestens einen manuellen Schalter (63) umfasst, der dazu ausgestaltet ist, wenn er manuell aktiviert wird, ein Signal auszugeben, das für das Vorhandensein eines Brandes repräsentativ ist.

8. Ölsystem nach einem der Ansprüche 1 bis 7, wobei in der ersten Steuerlogik die Regelungsgeschwindigkeit der Pumpe (22, 4) mit elektrischem Antrieb von der Drehzahl eines Körpers des Turbinenmotors abhängig ist.

9. Ölsystem nach einem der Ansprüche 1 bis 8, wobei in der zweiten Steuerlogik die Regelungsgeschwindigkeit der Pumpe (22, 4) mit elektrischem Antrieb ein vorbestimmter Wert ist.

10. Ölsystem nach einem der Ansprüche 1 bis 9, wobei in der zweiten Steuerlogik die globale Durchflussmenge der Pumpeinheit zwischen 100 und 600 l/h, vorzugsweise zwischen 100 und 300 l/h, ferner vorzugsweise zwischen 150 und 200 l/h, beträgt.

11. Turbinenmotor, der ein Ölsystem (1) nach einem der Ansprüche 1 bis 10 umfasst.

## Claims

1. An oil system for a turbomachine, comprising:
an oil circuit (2),
at least one oil-consuming piece of equipment (3a, 3b, 3c), supplied by the oil circuit (2),
a pumping unit, comprising at least one speed-pilotable electrically driven pump (22, 4), supplying the oil circuit (2), and
an electronic control unit (6), configured to pilot the electrically driven pump (22, 4),
wherein the electronic control unit (6) comprises two separate logics of piloting the electrically driven pump (22, 4),
wherein the electronic control unit (6) is configured to pilot the electrically driven pump (22, 4) according to the first logic by default,
**characterized in that**
the electronic control unit (6) is configured to switch to the second logic in case of receipt of a signal representative of the presence of a fire or of an overheating emitted by a fire detector (61), and **in that** the electronic control unit (6) is configured to stop the electrically driven pump (22, 4) when receiving a leakage signal coming from a leakage detector (62).

2. The oil system according to claim 1, wherein at least one oil-consuming piece of equipment (3a, 3b, 3c) is an accessory gear box (30), and
wherein the accessory gear box (30) comprises accessory gears contained in a casing.

3. The oil system according to claim 2, wherein the accessory gear box (30) comprises sprinklers (31) configured to spray oil from the oil circuit (2) onto at least one wall of the casing of the accessory gear box (30).

4. The oil system according to any one of claims 1 to 3, wherein the electrically driven pump (22, 4) is driven by at least one electric motor (4).

5. The oil system according to any one of claims 1 to 4, wherein the pumping unit comprises a mechanically driven main pump and an electrically driven secondary pump.

6. The oil system according to any one of claims 1 to 5, comprising at least one fire detector (61) configured to emit a signal representative of the presence of a fire when it detects the presence of a fire in a fire area of the turbomachine, preferably in the vicinity of the casing of the accessory box (30).

7. The oil system according to any one of claims 1 to 6, comprising at least one manual switch (63) configured to emit a signal representative of the presence of a fire when it is manually activated.

8. The oil system according to any one of claims 1 to 7, wherein, in the first control logic, the pilot speed of the electrically driven pump (22, 4) is a function of the speed of rotation of a body of the turbomachine.

9. The oil system according to any one of claims 1 to 8, wherein, in the second control logic, the pilot speed of the electrically driven pump (22, 4) is a predetermined value.

10. The oil system according to any one of claims 1 to 9, wherein, in the second control logic, the overall flow rate of the pumping unit is comprised between 100 and 600 l/h, preferably between 100 and 300 l/h, more preferably between 150 and 200 l/h.

11. A turbomachine, comprising an oil system (1) according to any one of claims 1 to 10.
